# EUROPÄISCHE PATENTANMELDUNG

(11) **EP 1 890 006 A1**
(43) Veröffentlichungstag der Anmeldung: **20.02.2008**
(21) Anmeldenummer: 06017090.9
(22) Anmeldetag: 16.08.2006
(51) Int. Cl.: F01D 5/10, F16F 15/14

(54) **Rotor mit einem Schwingungstilger für eine Strömungsmaschine**

(71) Anmelder: SIEMENS AKTIENGESELLSCHAFT, 80333 München (DE)
(72) Erfinder: Richter, Christoph, Dr., 49477 Ibbenbüren (DE)

(57) **Zusammenfassung**

Es wird ein Rotor (1) für eine Strömungsmaschine vorgestellt, wobei der Rotor (1) ein Schwingungsreduktionsmittel (3) aufweist, der derart ausgebildet ist, dass es im Betrieb der Strömungsmaschine auftauchende Schwingungen des Rotors (1) dämpft. Das Schwingungsreduktionsmittel (3) umfasst hierbei einen Ring (4) der um den Rotor (1) drehbar angeordnet ist, wobei der Ring (4) mit dem Rotor (1) gekoppelt ist. Die Kopplung an den Rotor (1) kann über elastisch federnde Elemente (9,9') wie z. B. Federn erfolgen.

## Beschreibung

Die Erfindung betrifft einen Rotor für eine Strömungsmaschine, wobei der Rotor ein Schwingungsreduktionsmittel aufweist, das derart ausgebildet ist, dass es im Betrieb der Strömungsmaschine auftauchende Schwingungen des Rotors dämpft.

Die Wellen von Generatoren sind in der Regel mit Antriebseinheiten wie z. B. Dampfturbinen oder Gasturbinen rotatorisch verbunden. Die Frequenz der Generatorwellen liegt bei 50 bzw. 60 Hertz. Allerdings erfahren die Generatorwellenstränge rotatorische Schwingungsanregungen über den Generator. In der Regel gilt, dass bei vierpoligen und zweipoligen Generatoren des Schwermaschinenbaus im sog. halb- bzw. volltourigen Betrieb sich als anregende Frequenz immer das Doppelte der elektrischen Netzfrequenz ergibt. Die dabei auftretenden Rotorstrangschwingungen und die Amplituden sind unter Umständen sehr schädlich für die Rotorwelle und auch für die daran angebundenen Turbinenschaufeln, wenn die auftretenden Amplituden bestimmte Werte überschreiten.

Um Rotorschwingungen mit zu großen Amplituden zu vermeiden, werden diese durch Massen und/oder Torsionssteifigkeitsverteilungen entlang des Rotors abgestimmt. Das bedeutet, dass die Wellen derart ausgebildet werden, dass an zugänglichen Stellen Massen angebracht oder entfernt werden. Durch diese Maßnahmen lassen sich allerdings nicht alle Schwingungen vermeiden.

Die Erfindung hat es sich daher zur Aufgabe gemacht, einen Rotor anzubieten, bei dem störende Schwingungen wirksam vermindert werden können.

Die Aufgabe wird gelöst durch einen Rotor für eine Strömungsmaschine, wobei der Rotor ein Schwingungsreduktionsmittel aufweist, das derart ausgebildet ist, dass es im Betrieb der Strömungsmaschine auftauchende Schwingungen des Rotors dämpft.

Die Erfindung geht von dem Aspekt aus, dass der Rotor für die Strömungsmaschine nicht wie üblich durch Hinzu- oder Wegnahme von Masse abgestimmt werden muss, sondern dass Schwingungsreduktionsmittel an dem Rotor angeordnet werden, die schädigende Schwingungen Dämpfen.

Das Schwingungsreduktionsmittel umfasst hierbei einen um den Rotor angeordneten drehbaren Ring, wobei der Ring mit dem Rotor gekoppelt ist. Der Rotor umfasst dadurch einen Ring als Schwingungsreduktionsmittel, der in Folge seiner Trägheit einer Schwingungsbewegung des Rotors entgegen wirkt. Die Schwingungsamplituden des Rotors werden dadurch vermindert, bzw. gedämpft.

Vorzugsweise wird der Ring über zumindest ein elastisches federndes Element am Rotor gekoppelt. Die Erfindung geht hierbei von dem Aspekt aus, da je nach Gewicht und Amplitude ein geeignetes elastisches federndes Element benötigt wird, um auftretende Schwingungen wirksam zu reduzieren.

In einer weiteren bevorzugten Ausgestaltung ist auf dem Rotor ein Rotorzapfen und ein Ringzapfen auf dem Ring vorgesehen. Das federnde elastische Element wird an dem Rotorzapfen und an dem Ringzapfen angeordnet. In einer weiteren bevorzugten Ausführungsform der Erfindung wird ein zweiter Rotorzapfen auf dem Rotor vorgesehen, wobei ein elastisches federndes Element zwischen dem zweiten Rotorzapfen und dem Ringzapfen angeordnet wird.

Bevorzugt wird ein Reibmittel zum Ausbilden eines reibenden Kontaktes zwischen dem Reibmittel und dem Ring angeordnet.

Ausführungsbeispiele der Erfindung werden anhand der Zeichnung näher erläutert.

### Es zeigen:

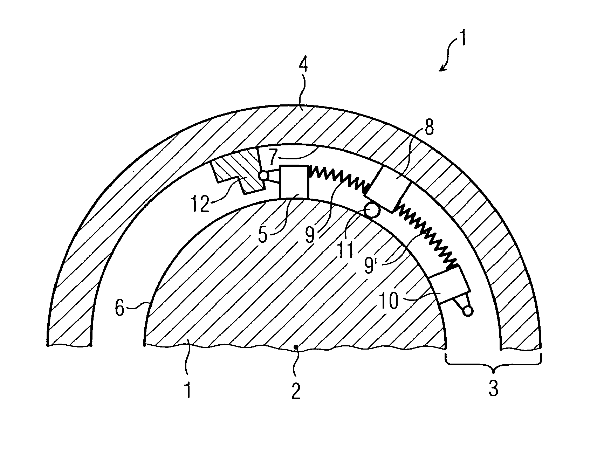

Figur 1 eine Schnittdarstellung durch einen Rotor mit einem erfindungsgemäßen Schwingungsreduktionsmittel.

In der Figur 1 ist ein Rotor 1 dargestellt. Der Rotor 1 ist um eine Drehachse 2 drehbar angeordnet. Solch ein Rotor 1 kann beispielsweise in einer Strömungsmaschine, wie zum Beispiel in einer Gas- oder Dampfturbine eingesetzt werden. Der Rotor 1 weist ein Schwingungsreduktionsmittel 3 auf, das derart ausgebildet ist, dass es im Betrieb der Strömungsmaschine auftauchende Schwingungen des Rotors 1 dämpft.

Im Betrieb rotiert der Rotor 1 mit einer Rotationsfrequenz um die Drehachse 2. Der Rotor 1 ist üblicherweise drehmomentübertragend mit dem Läufer eines Generators gekoppelt. Der Generator erzeugt elektrische Energie und ist an ein Versorgungsnetz angeschlossen an dem mehrere elektrische Verbraucher angekoppelt sind.

Solange die elektrische Energie zeitlich konstant vom Generator durch die elektrischen Verbraucher abgenommen wird, entstehen kaum Schwingungsspannungen auf dem Rotor 1. Beispielsweise können Schieflasten, zyklisches Zu- oder Abschalten von elektrischen Verbrauchern zu einem rückwirkenden Drehmoment auf den Rotor 1 führen, was zu Schwingungsanregungen führen könnte.

Das Schwingungsreduktionsmittel 3 umfasst einen um den Rotor 1 angeordneten drehbaren Ring 4 auf, wobei der Ring 4 mit dem Rotor 1 gekoppelt ist.

Dieser Ring 4 kann aus demselben Material wie der Rotor 1 ausgebildet sein. Das Material des Ringes 4 kann aber auch unterschiedlich zu dem Material des Rings sein. Es wäre zum Beispiel möglich, den Ring 4 aus einem Material herzustellen, dessen Materialdichte größer ist, als die Materialdichte des Rotors 1. Durch eine höhere Materialdichte des Ringes 4 erhöht sich dessen Tätigkeit, wodurch die Schwingungsreduktion des Schwingungsreduktionsmittels 3 vergrößert wird.

Ein Rotorzapfen 5 ist auf der Oberfläche 6 des Rotors angeordnet. Der Rotorzapfen 5 kann beispielsweise auf den Rotor 1 geschweißt oder geschraubt werden. Auf der Oberfläche 7 des Ringes 4 ist ein Ringzapfen 8 vorgesehen, wobei ein tangential wirkendes federndes Element 9 zwischen dem Rotorzapfen 5 und dem Ringzapfen 8 angeordnet ist. Damit ist der Ring 4 rotatorisch federnd gegen den Rotor 1 gelagert und stellt ein schwingungsfähiges System dar.

Der Rotor 1 weist einen zweiten Rotorzapfen 10 auf. Zwischen dem zweiten Rotorzapfen 10 und dem Ringzapfen 8 ist ein weiteres elastisches federndes Element 9' angeordnet.

Die elastisch federnden Elemente 9, 9' sind z.B. länglich ausgebildet und können in ihrer Längsrichtung durch eine Ausdehnungskraft gedehnt werden, wobei eine Rückhaltekraft entgegen der Ausdehnungskraft entsteht. Die Rückhaltekraft kann proportional zur Ausdehnung sein.

Der Ringzapfen 8 weist hierbei ein Lagermittel 11 zum Lagern des Ringes 4 auf dem Rotor 1 auf. Das Lagermittel 11 kann als Rollenlager ausgebildet sein.

Um die Dämpfung zu erhöhen kann der Rotor 1 ein Reibmittel 12 zum Ausbilden eines reibenden Kontaktes zwischen dem Reibmittel 12 und dem Ring 4 umfassen. Der reibende Kontakt zwischen dem Reibmittel 12 und dem Ring 4 entsteht durch Fließkraft, die das Reibmittel 12 nach außen treibt.

Das Reibmittel 12 kann aus demselben Material wie der Ring 4 hergestellt sein. Die Reibung, die sich zwischen dem Ring 4 und dem Reibmittel 12 ausbildet, ist die so genannte Gleitreibung.

Damit die durch Reibung verursachte Temperatur des Reibmittels 12 nicht zu groß wird, sollte die Berührungsfläche zwischen dem Reibmittel 12 und dem Ring 4 möglichst groß sein. Es können Kühlmöglichkeiten vorgesehen werden, damit die Temperatur des Reibmittels nicht zu groß wird.

Das Reibmittel 12 kann an dem Rotorzapfen 5 angeordnet sein.

In bevorzugten Ausführungsformen kann der Ringzapfen 8 und/oder der Rotorzapfen 10 einstückig mit dem Ring 4 bzw. Rotor 1 ausgebildet sein.

Das elastisch federnde Element 9, 9' kann als Feder ausgebildet sein.

Das Schwingungsreduktionsmittel 3 kann an bestehenden Rotoren nachträglich eingebaut werden. Es besteht auch die Möglichkeit, mehrere Schwingungsreduktionsmittel 3 an einem Rotor 1 anzuordnen.

## Patentansprüche

1. Rotor (1) für eine Strömungsmaschine,
wobei der Rotor (1) ein Schwingungsreduktionsmittel (3) aufweist,
das derart ausgebildet ist,
dass es im Betrieb der Strömungsmaschine auftauchende Schwingungen des Rotors (1) dämpft.

2. Rotor (1) nach Anspruch 1,
wobei das Schwingungsreduktionsmittel (3) einen um den Rotor (1) angeordneten drehbaren Ring (4) umfasst,
wobei der Ring (4) mit dem Rotor (1) gekoppelt ist.

3. Rotor (1) nach Anspruch 2,
wobei der Ring (4) über zumindest ein tangential wirkendes elastisch federndes Element (9) mit dem Rotor (1) gekoppelt ist.

4. Rotor (1) nach Anspruch 3,
wobei ein Rotorzapfen (5) auf dem Rotor (1) und ein Ringzapfen (8) auf dem Ring (4) vorgesehen sind
und das elastisch federnde Element (9) an dem Rotorzapfen (5) und an dem Ringzapfen (8) angeordnet ist.

5. Rotor (1) nach Anspruch 4,
wobei ein zweiter Rotorzapfen (10) auf dem Rotor (1) vorgesehen ist,
und ein elastisch federndes Element (9, 9') zwischen dem zweiten Rotorzapfen (10) und dem Ringzapfen (8) angeordnet ist.

6. Rotor (1) nach Anspruch 4 oder 5,
wobei der Ringzapfen (8) ein Lagermittel (11) zum Lagern des Ringes (4) auf dem Rotor (1) aufweist.

7. Rotor (1) nach Anspruch 6,
wobei das Lagermittel (11) als Rollenlager ausgebildet ist.

8. Rotor (1) nach einem der Ansprüche 2 bis 7,
wobei der Rotor (1) ein Reibmittel (12) zum Ausbilden eines reibenden Kontaktes zwischen dem Reibmittel (12) und dem Ring (4) umfasst.

9. Rotor (1) nach Anspruch 8,
wobei das Reibmittel (12) an einem Rotorzapfen (5, 10) angeordnet ist.

10. Rotor (1) nach einem der Ansprüche 4 bis 9,
wobei der Ringzapfen (8) und/oder der Rotorzapfen (5, 10) einstückig mit dem Ring (4) bzw. Rotor (1) ausgebildet ist.

11. Rotor (1) nach einem der Ansprüche 3 bis 10,
wobei das elastisch federnde Element (9, 9') eine Feder ist.
